# FASCICULE DE BREVET EUROPEEN

(11) **EP 2 751 437 B1**
(45) Date de publication et mention de la délivrance du brevet: **06.07.2016**
(21) Numéro de dépôt: 12750417.3
(22) Date de dépôt: 18.07.2012
(51) Int. Cl.: F16D 1/08, B62D 1/20

(54) **DISPOSITIF DE LIAISON D'UNE COLONNE DE DIRECTION AVEC UN BOITIER DE DIRECTION.**
VORRICHTUNG ZUM VERBINDEN EINER LENKSÄULE MIT EINEM LENKGETRIEBEGEHÄUSE
DEVICE FOR CONNECTING A STEERING COLUMN TO A STEERING GEAR HOUSING

(30) Priorité: 31.08.2011 FR 1157704
(43) Date de publication de la demande: 09.07.2014
(73) Titulaire: Robert Bosch Automotive Steering Vendôme, 41100 Vendome (FR)
(72) Inventeur: MOTTIER, Emmanuel, F-41100 Aze (FR); COUDERE, Benjamin, F-41100 Vendome (FR); COULON, Olivier, F-41000 Villebarou (FR)
(74) Mandataire: Novagraaf Technologies
(86) Numéro de dépôt international: PCT/FR2012/051705
(87) Numéro de publication internationale: WO 2013/030478

(56) Documents cités:
- WO-A1-2007/119026
- US-A- 2 910 842
- US-A1- 2003 161 679
- US-A1- 2005 105 966

## Description

L'invention concerne un dispositif de liaison de deux arbres entre eux.

Le document US 2005/0105966 A1 montre un tel dispositif de liaison.

Le dispositif de liaison selon l'invention est destiné notamment, mais non exclusivement, à être mis en oeuvre dans un système de direction pour coupler des moyens de commande, et plus particulièrement une colonne de direction, à un boitier de direction.

Dans un véhicule automobile, les moyens de commande du système de direction comportent un volant et une colonne de direction comprenant un arbre de direction solidaire du volant. Le boîtier de direction comprend quant à lui un pignon denté s'engrenant sur une crémaillère ménagée le long d'un arbre transversal de direction relié de part et d'autre aux roues directrices par un ensemble de biellettes de direction, la translation de l'arbre transversal entrainant la rotation des roues directrices du véhicule automobile.

L'arbre de direction de la colonne de direction est relié au pignon du boîtier de direction par un arbre de transmission intermédiaire. La colonne de direction et l'arbre de transmission intermédiaire d'une part ainsi que l'arbre de transmission intermédiaire et la boîte de direction d'autre part sont alors respectivement reliés par un dispositif de liaison comprenant un collier de serrage, appelé communément mâchoire ou joint de cardan.

Le collier de serrage comprend de manière classique en soi deux bras agencés l'un par rapport à l'autre pour délimiter une cavité pour recevoir une portion d'extrémité d'un des arbres à coupler avec l'autre arbre. Les bras de serrage comprennent chacun un trou pour le passage d'une vis de serrage destinée à serrer les bras de serrage autour de la portion d'extrémité de l'arbre selon un couple déterminé.

Afin d'assurer un serrage de la vis suffisant et ainsi appliquer une tension suffisante dans la connexion visée, à savoir la connexion entre la colonne de direction et l'arbre intermédiaire et/ou la connexion entre l'arbre intermédiaire et la boîte de direction, et ainsi permettre une tenue en endurance dynamique de la connexion, il est nécessaire que le collier de serrage soit suffisamment engagé sur l'arbre concerné par le couplage.

Or, dans certaines circonstances, il arrive que le collier de serrage ne soit pas suffisamment engagé sur l'arbre, la portion d'extrémité de l'arbre n'atteignant pas les trous de passage de la mâchoire. La vis de serrage pouvant être disposée au travers des trous de passage, l'accouplement est apparemment réalisé. Cependant, l'arbre n'étant pas suffisamment engagé dans le collier de serrage, le maintien de ce dernier sur l'arbre n'est pas assuré.

Afin d'empêcher un mauvais engagement ou un engagement insuffisant du collier de serrage sur un arbre, il est prévu dans les dispositifs de connexion classiques d'assortir le collier de pièces supplémentaires n'autorisant pas le passage de la vis de serrage dans les trous de passage du collier tant que ce dernier n'est pas complètement engagé. A titre d'exemple, il peut être cité la demande de brevet FR0128813. En l'espèce, la pièce supplémentaire mise en oeuvre dans ce document est un organe élastique consistant en une lame recourbée. La lame est agencée au niveau de la mâchoire de cardan de manière à ce que l'extrémité recourbée de la lame soit disposée en travers des trous de passage de la vis de serrage. La mise en place de la vis de serrage est alors empêchée tant qu'aucun arbre n'est introduit dans l'alésage de la mâchoire.

L'ajout d'une pièce supplémentaire pose cependant des problèmes d'encombrement et de coût.

Il est également répandu pour empêcher un mauvais engagement du collier sur un arbre de procéder à un usinage de type chanfrein ou de réaliser un lamage centré sur l'arbre.

Les usinages supplémentaires ont cependant pour conséquence de diminuer les zones de contact entre l'arbre et la mâchoire, ce qui s'avère préjudiciable pour la tenue en endurance dynamique dans un système de direction de la connexion boîte de transmission / arbre intermédiaire de transmission et arbre de transmission intermédiaire / colonne de direction.

L'invention vise à remédier à ces problèmes en proposant un dispositif de liaison tel que définit dans la revendication 1, et permettant d'empêcher le serrage et le maintien axial, par la vis de serrage, du collier de serrage sur l'arbre lorsque ce dernier n'est pas suffisamment engagé dans le collier.

A cet effet, et selon un premier aspect, l'invention propose un dispositif de liaison d'une colonne de direction avec un boîtier de direction, le dispositif comprenant un arbre définissant un axe d'insertion et un sens d'insertion, présentant une portion d'extrémité et une portion de serrage située en arrière de la portion d'extrémité dans le sens d'insertion, un collier de serrage comportant deux bras agencés l'un par rapport à l'autre pour délimiter une cavité apte à guider l'arbre suivant l'axe d'insertion dans le sens d'insertion jusqu'à une position d'engagement et à maintenir l'arbre en position d'engagement, chaque bras comprenant un trou, et une vis de serrage des bras sur l'arbre dans la position d'engagement selon un couple déterminé, les trous de chaque bras étant alignés l'un avec l'autre pour définir avec la portion de serrage un axe de passage de la vis de serrage perpendiculaire à l'axe d'insertion, la cavité comprenant une zone de couplage et une zone d'entrée située en arrière de la zone de couplage dans le sens d'insertion, la zone d'entrée étant dimensionnée par rapport à la zone de couplage de sorte à empêcher le serrage de la vis de serrage selon le couple déterminé lorsque la portion d'extrémité est située dans la zone d'entrée.

De manière classique, le couple de serrage déterminé correspond à un couple de serrage dit optimal permettant de générer une déformation des bras du collier de serrage à la limite de la plastification.

Avantageusement, la zone d'entrée présente une section supérieure à celle de la zone de couplage.

La présence d'une zone élargie précédant la zone de couplage dans le sens d'insertion de l'arbre dans la cavité du collier de serrage, permet ainsi de supprimer les zones d'appui transmettant les efforts des bras 10, 11 sur l'arbre 2 lors du serrage de la vis. Ainsi, la portion de l'arbre 2 disposée dans la zone d'entrée 5 n'étant plus en contact avec tout ou partie des faces internes du collier de serrage, les efforts de collier en réaction au serrage de la vis ne sont pas transmis à l'arbre. Le couple de serrage défini ne peut donc être atteint.

La zone de couplage et la zone d'entrée présentent, en partie inférieure, une ou plusieurs surfaces d'appui de l'arbre.

Les surfaces d'appui de la zone d'entrée sont ménagées dans le prolongement des surfaces d'appui de la zone de couplage (4) selon un axe parallèle à l'axe d'insertion.

Avantageusement, la zone d'entrée est décentrée verticalement par rapport à l'axe d'insertion. Cela permet ainsi de préserver des surfaces d'appui inférieures au niveau de la zone de la zone de couplage mais également au niveau de la zone d'entrée. On entend par l'expression « décentré verticalement », un décentrage situé dans un plan perpendiculaire à l'axe de serrage et passant par l'axe d'insertion. La présence de surfaces d'appui inférieures permet d'assurer la tenue en endurance dynamique du collier lorsque ce dernier est assemblé avec l'arbre.

Avantageusement, la zone d'entrée est décentrée horizontalement par rapport à l'axe d'insertion. On entend par l'expression « décentré horizontalement », un décentrage situé dans un plan parallèle à l'axe de serrage et passant par l'axe d'insertion.

Selon un mode de réalisation avantageux, il peut être prévu que la zone d'entrée soit décentrée conjointement verticalement et horizontalement.

Avantageusement, les trous débouchent dans la zone de couplage, au voisinage de la zone d'entrée.

Avantageusement, la cavité comporte une extrémité définissant une face d'accostage dans la zone d'entrée, la zone d'entrée (5) présentant une longueur sensiblement égale à la distance des trous avec la face d'accostage.

Avantageusement, la zone d'entrée forme un lamage. Cette configuration a pour avantage de simplifier la fabrication du collier de serrage.

Selon une autre variante de réalisation, la zone d'entrée présente un profil chanfreiné. Cette configuration a pour avantage de faciliter le montage en continu du collier de serrage sur l'arbre.

Selon un deuxième aspect, l'invention concerne un collier de serrage destiné à être mis en oeuvre dans un dispositif de liaison d'une colonne de direction avec un boîtier de direction tel que décrit précédemment.

D'autres objets et avantages de l'invention apparaîtront au cours de la description qui suit, faite en référence aux dessins annexés, dans lesquels :
- la figure 1 illustre une vue schématique en perspective d'un dispositif pour la liaison d'une colonne de direction avec un boîtier selon un premier mode de réalisation de l'invention ;
- la figure 2 illustre une vue de face du dispositif de liaison de la figure 1 ;
- la figure 3 illustre une vue en coupe selon l'axe III-III du dispositif de liaison de la figure 1 ;
- la figure 4 illustre une vue schématique en perspective d'un dispositif de liaison selon un deuxième mode de réalisation de l'invention ;
- la figure 5 illustre une vue de face du dispositif de la figure 4 ;
- la figure 6 illustre une vue schématique en perspective d'un dispositif de liaison selon un troisième mode de réalisation de l'invention ;
- la figure 7 illustre une vue de face du dispositif de liaison de la figure 6 ;
- la figure 8 illustre une vue en coupe selon l'axe VIII-VIII du dispositif de la figure 6 ;
- les figures 9, 11, 13 et 15 illustrent des variantes du profil de couplage mis en oeuvre dans le dispositif de liaison ; et
- les figures 10, 12, 14, 16 illustrent des vues de face des dispositifs de liaison illustrés respectivement sur les figures 9 et 11.

Pour plus de clarté, les éléments identiques ou similaires des différents modes de réalisation sont repérés par des signes de référence identiques sur l'ensemble des figures.

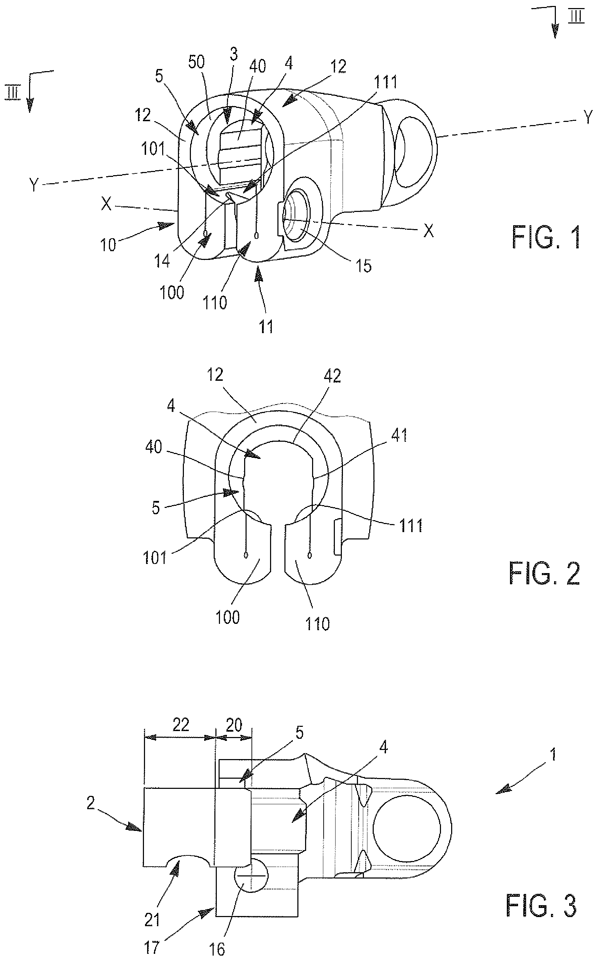

En relation avec les figures 1 à 3, il est décrit un dispositif de liaison permettant d'assembler une colonne de direction avec un boîtier de direction. Plus particulièrement, le dispositif de liaison est mis en oeuvre pour coupler l'arbre de transmission intermédiaire avec l'axe du pignon de la boîte de direction et/ou l'arbre de transmission intermédiaire avec l'arbre de direction de la colonne de direction.

Dans le mode de réalisation décrit, le dispositif de liaison comprend un arbre 2, un collier de serrage 1 agencé pour être monté sur l'arbre 2 et des moyens de serrage comprenant une vis 16 permettant le serrage du collier de serrage 1 autour de l'arbre 2 selon un couple déterminé. Comme on le verra plus loin, le serrage selon un couple déterminé est obtenu lorsque l'arbre 2 est suffisamment engagé dans le collier.

Selon l'invention, l'arbre 2, lequel définit un axe d'insertion YY et un sens d'insertion, présente une portion d'extrémité 20 et une portion de serrage 22. Comme on le verra plus loin, la portion de serrage 22 correspond à la portion avec laquelle la vis de serrage est mise en contact pour assurer le serrage du collier 1 sur l'arbre 2. La portion de serrage 22 est située en arrière de la portion d'extrémité 20 dans le sens d'insertion. En d'autres termes, lorsque le collier de serrage 1 est engagé sur l'arbre 2, la portion d'extrémité accoste en premier lieu le collier de serrage 1.

Le collier de serrage 1 comporte deux bras 10, 11 reliés l'un à l'autre par une portion de raccordement 12. Les bras 10, 11 sont agencés avec la portion de raccordement 12 pour délimiter une cavité 3 apte à recevoir l'arbre 2, et notamment les portions d'extrémité et de serrage 20, 22 de l'arbre 2.

Chaque bras 10, 11 comprend un trou 14, 15 pour le passage de la vis de serrage 16 destinée à serrer les bras 10, 11 sur les portions d'extrémité et de serrage de l'arbre 2. Les trous 14, 15 sont alignés l'un avec l'autre suivant un axe de serrage XX perpendiculaire à l'axe d'insertion de la cavité 3 correspondant à l'axe d'insertion de l'arbre 2 lorsque celui-ci est positionné dans la cavité 3.

La cavité 3 selon l'invention est agencée pour présenter deux zones 4, 5 adjacentes. Comme on le verra plus loin, l'une des zones 5 est agencée par rapport à l'autre zone 4 pour empêcher le serrage de la vis de serrage 16 selon le couple déterminé lorsque le collier de serrage 1 est insuffisamment engagé sur l'arbre 2 (on parlera par la suite de zone d'entrée ou zone de détrompage), l'autre zone 4 assurant le couplage du collier du serrage 1 sur l'arbre 2 (on parlera par la suite de zone de couplage).

Selon l'invention, la zone de couplage 4 est destinée à recevoir les portions d'extrémité et de serrage 20, 22 de l'arbre 2. Dans cette configuration où les deux portions 20, 22 sont disposées dans la zone de couplage 4, le collier de serrage 1 est considéré comme correctement, ou du moins suffisamment engagé, sur l'arbre, pour permettre le serrage de la vis 16 suivant le couple déterminé.

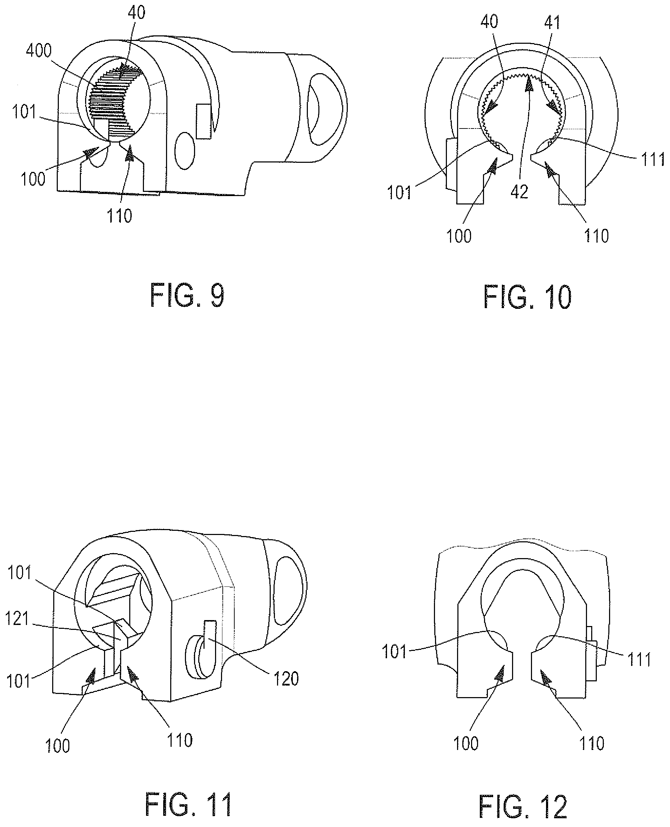

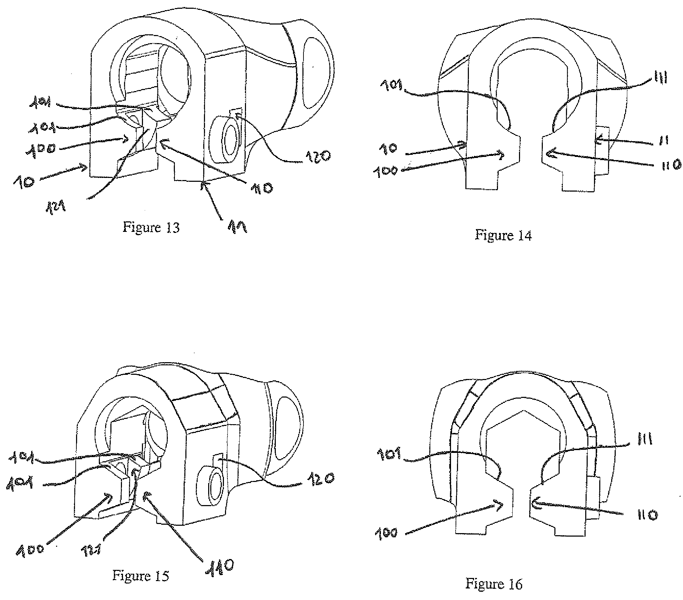

Afin d'assurer une connexion satisfaisante entre les portions d'extrémité et de serrage 20, 22 de l'arbre 2 et la zone de couplage 4 du collier de serrage 1, et ainsi assurer la transmission du couple entre les deux arbres relié par le dispositif de liaison, la zone de couplage 4 présente un profil complémentaire avec celui des portions d'extrémité et de serrage 20, 22 de l'arbre 2. Dans le mode de réalisation décrit, la zone de couplage 4 comprend deux parois latérales 40, 41 crantée aptes à coopérer avec des méplats de formes crantées complémentaires ménagés sur les faces latérales de la portion d'extrémité 20 de l'arbre 2, les deux parois latérales 40, 41 crantées étant raccordées l'une à l'autre par une paroi supérieure 42 de raccordement de forme en arc de cercle correspondant à la forme de la face supérieure de la portion d'extrémité 20 de l'arbre 2. Il est bien entendu évident que la zone de couplage 4 ne se limite pas à une telle configuration et que toute forme ou profil permettant d'assurer le couplage du collier de serrage 1 avec un arbre pourra être mis en oeuvre sans pour autant sortir du cadre de l'invention. Par exemple, et avantageusement, il peut être prévu une zone de couplage 4 dont les parois latérales 40, 41 et supérieure 42 sont pourvues de cannelures 400 (figures 9, 10). Il peut être prévu également une zone de couplage 4 présentant une paroi à six pans (figures 15 et 16). Dans la présente demande, sont désignées par parois des zones d'entrée et de couplage, les faces internes de ces zones.

Par ailleurs, la zone de couplage 4 et les portions d'extrémité et de serrage 20, 22 de l'arbre 2 sont dimensionnées de manière à offrir un jeu suffisant pour permettre l'engagement du collier de serrage 1 sur l'arbre 2 tout en assurant sa bonne tenue sur ce dernier.

Dans le mode de réalisation décrit, chaque bras 10, 11 comporte en outre des extensions 100, 110 formant une ou plusieurs zones présentant des surfaces d'appui inférieures 101, 111 au niveau de la zone de couplage 4. Ainsi, lorsque le collier de serrage 1 est en place sur l'arbre 2, les portions d'extrémité et de serrage 20, 22 de l'arbre 2 reçues dans la zone de couplage 4 sont en appui respectivement sur les parois latérales 40, 41 et la paroi supérieure 42 de la cavité 3 ainsi que sur les surfaces d'appui inférieures 101, 111.

Selon l'invention, la zone d'entrée 5 est dimensionnée par rapport à la zone de couplage 4 pour former une zone de détrompage 5. Plus particulièrement, la zone d'entrée 5 est dimensionnée pour empêcher le serrage de la vis de serrage 16 selon le couple déterminé lorsque le collier de serrage 1 est insuffisamment engagée sur l'arbre 2 (figure 3), c'est-à-dire lorsque la portion d'extrémité n'est pas engagée dans la zone de couplage.

Plus particulièrement, la zone d'entrée 5 présente une section supérieure à celle de la zone de couplage 4. La présence d'un élargissement précédant la zone de couplage 4 dans le sens d'insertion de l'arbre 2 dans la cavité 3, permet ainsi de supprimer les zones d'appui transmettant les efforts des bras 10, 11 sur l'arbre 2 lors du serrage de la vis. Ainsi, la portion de l'arbre 2 disposée dans la zone d'entrée 5 ne peut être ni maintenu ni serrée par les portions des bras 10, 11 délimitant la zone d'entrée 5.

Avantageusement, les trous 14, 15 débouchent dans la zone de couplage 4, au voisinage de la zone d'entrée 5. Selon un mode de réalisation préféré, le collier de serrage 1 présente une extrémité définissant une face d'accostage 17 dans la zone d'entrée 5, la zone d'entrée (5) présentant une longueur sensiblement égale à la distance des trous 14, 15 avec la face d'accostage 17.

La présence d'un élargissement de la cavité 3 au niveau des trous 14, 15 et le positionnement de ces trous 14, 15 par rapport à cet élargissement permet de réduire les erreurs de montage tout en empêchant le serrage du collier de serrage 1 sur l'arbre 2 lorsque celui-ci n'est pas suffisamment introduit dans la cavité 3.

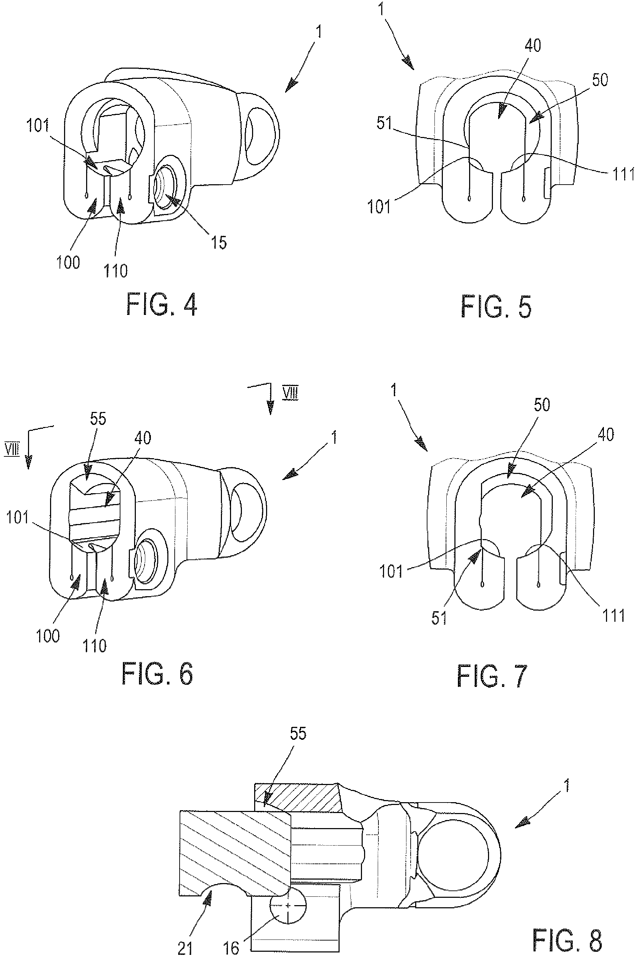

Ainsi, dans le cas où la portion d'extrémité de l'arbre n'est pas introduite suffisamment dans le collier de serrage 1 (figures 3 et 8), la vis de serrage, même si elle peut être engagée dans les trous de passage 14, 15, ne peut serrer les bras 10, 11 du collier de serrage sur l'arbre 2, aucun effort ne pouvant être transmis entre les parois de la zone d'entrée 5 et l'arbre 2. Il est à noter que si l'arbre 2 est engagé dans le collier de serrage 1 de manière à ce que la portion d'extrémité 20 interfère légèrement avec les trous 14, 15, la mise en place de la vis de serrage 16 déplacera la portion d'extrémité 20 dans la zone d'entrée qui ne pourra pas alors être serrée au couple déterminé. Il est également à noter que, dans la configuration où la portion d'extrémité 20 est engagée dans la zone de couplage 4 mais que la portion de serrage 22 est partiellement ou non engagée dans la zone de couplage de sorte la portion de serrage 22 ne définit pas avec les trous 14, 15 un axe de passage pour la vis de serrage 16, la portion de l'arbre positionnée en regard des trous 14, 15 constituera un moyen de détrompage empêchant la mise en place de la vis de serrage dans les trous.

Avantageusement, la portion de serrage 20 de l'arbre comporte une gorge périphérique de positionnement et d'immobilisation 21 prévue pour être positionnée en regard des trous 14, 15 du collier de serrage 1 lorsque l'arbre est correctement engagé dans la cavité 3, ie. lorsque la portion d'extrémité 20 et la portion de serrage 22 sont situées toutes deux dans la zone de couplage 4 du collier de serrage 1. La gorge 21 permet, avec la vis de serrage 16 lorsque celle-ci traverse les trous 14, 15 des bras 10, 11, la retenue de l'arbre dans le collier.

Dans le mode de réalisation illustré sur les figures 1 et 2, la zone d'entrée 5 est formée par un lamage 50 ou logement cylindrique de section supérieure à la section de la zone de couplage 4.

Sur la figure 2, la zone d'entrée 5 présente un décentrage vertical en direction de la partie supérieure du collier 1 par rapport à l'axe d'insertion YY de la zone de couplage. Le décentrage vertical est prévu de manière à prévoir dans la zone d'entrée 5 des surfaces d'appui 101 ménagées dans le prolongement des surfaces d'appui 111 de la zone de couplage 4. Cela permet ainsi de préserver la tenue en endurance de la liaison collier/arbre. Cela permet également de faciliter le montage du collier 1 sur l'arbre 2.

La zone d'appui inférieure de la zone d'entrée 5 étant conservée, il s'ensuit un élargissement au niveau des seules parois latérales et supérieure de la zone d'entrée 5. Il est à noter que l'élargissement peut s'étendre sur toute la hauteur des parois latérales comme illustré sur les figures 1, 2, 9 et 10 ou, comme illustré sur les figures 4, 5, 11, 12, sur une partie seulement de la hauteur des parois latérales. L'étendue de l'élargissement au niveau des parois latérales de la zone d'entrée 5 sera déterminée de manière à assurer à la fois le détrompage de l'arbre lorsque ce dernier n'est pas suffisamment engagé dans la mâchoire et la tenue en endurance de la liaison collier / arbre.

La présence d'un lamage 50 en amont de la zone de couplage 4 comme illustré sur la figure 2, où les zones d'appui latérales et supérieure ont été supprimées et la zone d'appui inférieure 101 conservée permet d'empêcher toute transmission d'effort du collier sur la portion d'extrémité 20 de l'arbre 2 disposée dans la zone d'entrée 5 lors du serrage de la vis tout en maintenant une tenue en endurance de la connexion collier de serrage 1 / arbre 2 équivalente à celle d'un collier de serrage classique avec l'arbre.

Selon un mode de réalisation particulier illustré sur les figures 4 et 5, la zone d'entrée 5 présente un lamage 50 décentré verticalement et horizontalement. Ce décentrage vertical et horizontal a pour avantage, outre de supprimer toute zone d'appui sur les parois latérales et supérieure du lamage, de ménager une butée axiale 51 au niveau de la face d'engagement. Cette butée axiale a pour fonction, en coopération avec épaulement ménagé sur l'arbre 2, de permettre un arrêt en translation du collier de serrage sur l'arbre 2. Il est à noter que l'épaulement est disposé sur l'arbre 2 pour que lorsque l'épaulement 16 est arrêté par la butée axiale 51, la gorge de positionnement et d'immobilisation 21 est positionnée en regard des trous 14, 15.

Selon un autre mode de réalisation illustré sur les figures 6, 7 et 8, il peut être prévu une zone d'entrée 5 présentant un profil chanfreiné 55.

Le profil chanfreiné illustré sur les figures 6 et 8 montre un décalage vertical et horizontal du profil par rapport à l'axe d'insertion de la zone de couplage 4, les faces d'appui inférieures étant conservées. Un tel profil permet, comme celui illustré sur les figures 4 et 5, d'enlever toutes zones d'appui latérales et supérieure tout en conservant une butée axiale. Il est bien entendu évident qu'il peut être prévu un profil chanfreiné présentant seulement un décalage vertical sans pour autant sortir de l'invention.

Les caractéristiques et avantages décrits précédemment pour une zone d'entrée formée d'un lamage s'appliquent également à une zone d'entrée présentant un profil chanfreiné.

Dans les modes de réalisation illustrées sur les figures, le collier est constitué d'une seule pièce monobloc. Il est bien entendu évident que le collier de serrage ne se limite pas à une telle configuration.

Dans les modes de réalisation illustrées sur les figures 1 à 7, les extensions 100, 110 des bras 10, 11, et donc les surfaces d'appui 101, 111, résultent d'un pliage de matière à 180 degrés. Il est bien entendu évident que les surfaces d'appui peuvent être réalisées de toute autre manière sans pour autant sortir du cadre de l'invention.

En particulier, et comme illustré sur les figures 9 à 15, les extensions 100, 110 des bras 10, 11, et donc les surfaces d'appui 101, 111, peuvent résulter d'une pliage de matière à 90 degrés mais également d'une semi découpe 120 dans la matière sur les faces extérieures des bras 10 et 11 suivie d'un déplacement de matière 121 par poinçonnage sur les faces extérieures des bras vers l'intérieur de la zone d'entrée 5.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Dispositif de liaison d'une colonne de direction avec un boîtier de direction,
le dispositif comprenant :
un arbre (2) définissant un axe d'insertion (YY) et un sens d'insertion, présentant une portion d'extrémité (20) et une portion de serrage (22) située en arrière de la portion d'extrémité (20) dans le sens d'insertion,
un collier de serrage (1) comportant deux bras (10, 11) agencés l'un par rapport à l'autre pour délimiter une cavité (3) apte à guider l'arbre (2) suivant l'axe d'insertion (YY) dans le sens d'insertion jusqu'à une position d'engagement et à maintenir l'arbre (2) en position d'engagement, chaque bras (10, 11) comprenant un trou (14, 15), et
une vis de serrage (16) des bras (10, 11) sur l'arbre dans la position d'engagement selon un couple déterminé, les trous (14, 15) de chaque bras étant alignés l'un avec l'autre pour définir avec la portion de serrage (22) un axe de passage (XX) de la vis de serrage (16) perpendiculaire à l'axe d'insertion (YY),
la cavité (3) comprenant une zone de couplage (4) et une zone d'entrée (5) située en arrière de la zone de couplage dans le sens d'insertion, la zone d'entrée (5) étant dimensionnée par rapport à la zone de couplage (4) de sorte à empêcher le serrage de la vis de serrage selon le couple déterminé lorsque la portion d'extrémité est située dans la zone d'entrée (5),
la zone de couplage (4) présentant des parois latérales (40, 41), une paroi supérieure (42) de raccordement des parois latérales (40, 41) de forme en arc de cercle correspondant à la forme de la face supérieure de la portion d'extrémité (20) de l'arbre (2),
la zone d'entrée (5) présente une section supérieure à celle de la zone de couplage (4),
**caractérisé en ce que** la zone de couplage (4) et la zone d'entrée (5) présentent, en partie inférieure, une ou plusieurs surfaces d'appui (101, 111) de l'arbre (2), et **en ce que** les surfaces d'appui (101) de la zone d'entrée (5) sont ménagées dans le prolongement des surfaces d'appui (111) de la zone de couplage (4) selon un axe parallèle à l'axe d'insertion (YY), les surfaces d'appui (111) de la zone de couplage (4) étant opposées à la paroi supérieure (42).

2. Dispositif de liaison selon la revendication 1, **caractérisé en ce que** la zone d'entrée (5) est décentrée verticalement par rapport à l'axe d'insertion (YY).

3. Dispositif de liaison selon l'une des revendications 1 à 2, **caractérisé en ce que** la zone d'entrée (5) est décentrée horizontalement par rapport à l'axe d'insertion (YY).

4. Dispositif de liaison selon l'une quelconque des revendications 1 à 3, **caractérisé en ce que** les trous (14, 15) débouchent dans la zone de couplage (4), au voisinage de la zone d'entrée (5).

5. Dispositif de liaison selon l'une quelconque des revendications 1 à 4, **caractérisé en ce que** le collier de serrage (1) présente une extrémité définissant une face d'accostage (17) dans la zone d'entrée (5), la zone d'entrée (5) présentant une longueur sensiblement égale à la distance des trous (14, 15) avec la face d'accostage (17).

6. Dispositif de liaison selon l'une quelconque des revendications 1 à 5, **caractérisé en ce que** la zone d'entrée (5) forme un lamage.

7. Dispositif de liaison selon l'une quelconque des revendications 1 à 6, **caractérisé en ce que** la zone d'entrée (5) présente un profil chanfreiné.

8. Dispositif de liaison selon l'une des revendications 1 à 7, **caractérisé en ce que** les surfaces d'appui (101, 111) résultant d'un pliage de matière à 180 degrés des extensions (100, 110) des bras (10, 11).

9. Dispositif de liaison selon l'une des revendications 1 à 7, **caractérisé en ce que** les surfaces d'appui (101, 111) résultent d'un pliage de matière à 90 degrés des extensions (100, 110) des bras (10, 11).

10. Dispositif de liaison selon l'une des revendications 1 à 7, **caractérisé en ce que** les surfaces d'appui (101, 111), résultent d'une semi découpe (120) dans la matière sur les faces extérieures des bras (10, 11) suivie d'un déplacement de matière (121) par poinçonnage sur les faces extérieures des bras (10, 11) vers l'intérieur de la zone d'entrée (5).

11. Collier de serrage destiné à être mis en oeuvre dans un dispositif de liaison d'une colonne de direction avec un boîtier de direction selon l'une quelconque des revendications 1 à 10.

## Patentansprüche

1. Vorrichtung zum Verbinden einer Lenksäule mit einem Lenkgetriebegehäuse, wobei die Vorrichtung Folgendes umfasst:
eine Welle (2), welche eine Einsatzachse (YY) und eine Einsatzrichtung definiert, welche einen Endabschnitt (20) und einen Klemmabschnitt (22) aufweist, welcher in Einsatzrichtung hinter dem Endabschnitt (20) angeordnet ist,
eine Klemmschelle (1), welche zwei Arme (10, 11) hat, welche in Bezug zueinander angeordnet sich, um einen Hohlraum (3) abzugrenzen, welcher geeignet ist, die Welle (2) gemäß der Einsatzachse (YY) in der Einsatzrichtung bis zu einer Eingriffsposition zu führen und die Welle (2) in Eingriffsposition zu halten, wobei jeder Arm (10, 11) ein Loch (14, 15) und
eine Schraube zum Klemmen (16) der Arme (10, 11) auf der Welle in der Eingriffsposition gemäß einem festgelegten Drehmoment umfasst, wobei die Löcher (14, 15) von jedem Arm zueinander ausgerichtet sind, um mit dem Klemmabschnitt (22) eine Durchgangsachse (XX) der Klemmschraube (16) zu definieren, welche senkrecht zur Einsatzachse (YY) ist,
wobei der Hohlraum (3) einen Koppelbereich (4) und einen Eintrittsbereich (5) umfasst, welcher in der Einsatzrichtung hinter dem Koppelbereich angeordnet ist, wobei der Eintrittsbereich (5) in Bezug auf den Koppelbereich (4) derartig dimensioniert ist, dass das Klemmen der Klemmschraube gemäß dem festgelegten Drehmoment verhindert wird, wenn sich der Endabschnitt in dem Eintrittsbereich (5) befindet,
wobei der Koppelbereich (4) Seitenwände (40, 41), eine obere Wand (42) zur Verbindung der Seitenwände (40, 41) in Form eines Kreisbogens, welcher der Form der oberen Fläche des Endabschnitts (20) der Welle (2) entspricht, aufweist,
der Eintrittsbereich (5) weist einen Abschnitt auf, welcher über demjenigen des Koppelbereichs (4) liegt, **dadurch gekennzeichnet, dass** der Koppelbereich (4) und der Eintrittsbereich (5) im unteren Teil eine oder mehrere Flächen (101, 111) zur Stütze der Welle (2) aufweisen, und dass die Stützflächen (101) des Eintrittsbereichs (5) in der Verlängerung der Stützflächen (111) des Koppelbereichs (4) gemäß einer parallel zur Einsatzachse (YY) verlaufenden Achse eingerichtet sind, wobei die Stützflächen (111) des Koppelbereichs (4) der oberen Wand (42) gegenüber liegen.

2. Verbindungsvorrichtung nach Anspruch 1, **dadurch gekennzeichnet, dass** der Eintrittsbereich (5) in Bezug auf die Einsatzachse (YY) vertikal dezentriert ist.

3. Verbindungsvorrichtung nach einem der Ansprüche 1 bis 2, **dadurch gekennzeichnet, dass** der Eintrittsbereich (5) in Bezug auf die Einsatzachse (YY) horizontal dezentriert ist.

4. Verbindungsvorrichtung nach einem der Ansprüche 1 bis 3, **dadurch gekennzeichnet, dass** die Löcher (14, 15) in der Nähe des Eintrittsbereichs (5) in den Koppelbereich (4) münden.

5. Verbindungsvorrichtung nach einem der Ansprüche 1 bis 4, **dadurch gekennzeichnet, dass** die Klemmschelle (1) ein Ende aufweist, welches eine Anlegefläche (17) im Eintrittsbereich (5) definiert, wobei der Eintrittsbereich (5) eine Länge aufweist, welche im Wesentlichen gleich dem Abstand der Löcher (14, 15) zur Anlegefläche (17) ist.

6. Verbindungsvorrichtung nach einem der Ansprüche 1 bis 5, **dadurch gekennzeichnet, dass** der Eintrittsbereich (5) eine Senkung bildet.

7. Verbindungsvorrichtung nach einem der Ansprüche 1 bis 6, **dadurch gekennzeichnet, dass** der Eintrittsbereich (5) ein angefastes Profil aufweist.

8. Verbindungsvorrichtung nach einem der Ansprüche 1 bis 7, **dadurch gekennzeichnet, dass** die Stützflächen (101, 111) aus einer Faltung von Material um 180 Grad der Verlängerungen (100, 110) der Arme (10, 11) entstehen.

9. Verbindungsvorrichtung nach einem der Ansprüche 1 bis 7, **dadurch gekennzeichnet, dass** die Stützflächen (101, 111) aus einer Faltung von Material um 90 Grad der Verlängerungen (100, 110) der Arme (10, 11) entstehen.

10. Verbindungsvorrichtung nach einem der Ansprüche 1 bis 7, **dadurch gekennzeichnet, dass** die Stützflächen (101, 111) aus einem halben Einschnitt (120) in das Material auf den äußeren Flächen der Arme (10, 11) gefolgt von einer Verlagerung des Materials (121) durch Stanzen auf die äußeren Flächen der Arme (10, 11) ins Innere des Eintrittsbereichs (5) entstehen.

11. Klemmschelle, welche vorgesehen ist, in einer Verbindungsvorrichtung einer Lenksäule mit einem Lenkgetriebegehäuse nach einem der Ansprüche 1 bis 10 eingesetzt zu werden.

## Claims

1. Device for connecting a steering column to a steering gear housing, with the device comprising:
a shaft (2) defining an axis of insertion (YY) and a direction of insertion, having an end portion (20) and a clamping portion (22) situated to the rear of the end portion (20) in the direction of insertion,
a clamping collar (1) comprising two arms (10, 11) arranged relative to one another in such a way as to delimit a cavity (3) able to guide the shaft (2) according to the axis of insertion (YY) in the direction of insertion into a position of engagement and to keep the shaft (2) in position of engagement, with each arm (10, 11) comprising a hole (14, 15), and
a clamping screw (16) for clamping the arms (10, 11) onto the shaft in the position of engagement according to a set torque, the holes (14, 15) of each arm being aligned with one another in order to define with the clamping portion (22) an axis of passage (XX) for the clamping screw (16) perpendicular to the axis of insertion (YY),
the cavity (3) comprising a coupling zone (4) and an entry zone (5) situated to the rear of the coupling zone in the direction of insertion, the entry zone (5) being dimensioned in relation to the coupling zone (4) in such a way as to prevent the clamping of the clamping screw according to the set torque when the end portion is situated in the entry zone (5),
the coupling zone (4) having lateral walls (40, 41), an upper wall (42) for connecting the lateral walls (40, 41) in the shape of an arc of a circle corresponding to the shape of the upper surface of the end portion (20) of the shaft (2),
the entry zone (5) has a section greater than that of the coupling zone (4),
**characterised in that** the coupling zone (4) and the entry zone (5) have, in the lower portion, one or several bearing surfaces (101, 111) for the shaft (2), and **in that** the bearing surfaces (101) of the entry zone (5) are arranged in the extension of the bearing surfaces (111) of the coupling zone (4) according to an axis parallel to the axis of insertion (YY), with the bearing surfaces (111) of the coupling zone (4) being opposite to the upper wall (42).

2. Device for connecting according to claim 1, **characterised in that** the entry zone (5) is vertically offset in relation to the axis of insertion (YY).

3. Device for connecting according to either of claims 1 and 2, **characterised in that** the entry zone (5) is horizontally offset in relation to the axis of insertion (YY).

4. Device for connecting according to any of claims 1 to 3, **characterised in that** the holes (14, 15) open into the coupling zone (4), in the vicinity of the entry zone (5).

5. Device for connecting according to any of claims 1 to 4, **characterised in that** the clamping collar (1) has an end defining a docking surface (17) in the entry zone (5), with the entry zone (5) having a length substantially equal to the distance of the holes (14, 15) with the docking surface (17).

6. Device for connecting according to any of claims 1 to 5, **characterised in that** the entry zone (5) forms a counterbore.

7. Device for connecting according to any of claims 1 to 6, **characterised in that** the entry zone (5) has a chamfered profile.

8. Device for connecting according to one of claims 1 to 7, **characterised in that** the bearing surfaces (101, 111) result from a folding of material to 180 degrees of the extensions (100, 110) of the arms (10, 11).

9. Device for connecting according to one of claims 1 to 7, **characterised in that** the bearing surfaces (101, 111) result from a folding of material to 90 degrees of the extensions (100, 110) of the arms (10, 11).

10. Device for connecting according to one of claims 1 to 7, **characterised in that** the bearing surfaces (101, 111) result from a half-cut (120) in the material on the external surfaces of the arms (10, 11) followed by a displacement of material (121) by punching on the external surfaces of the arms (10, 11) towards the interior of the entry zone (5).

11. Clamping collar intended to be employed in a device for connecting a steering column with a steering gear housing according to any of claims 1 to 10.
